# EUROPEAN PATENT APPLICATION

(11) **EP 1 380 991 A1**
(43) Date of publication of application: **14.01.2004**
(21) Application number: 02425447.6
(22) Date of filing: 08.07.2002
(51) Int. Cl.: G06N 1/00

(54) **Method and relative quantum gate for running a Grover's or Deutsch-Jozsa's quantum algorithm**

(71) Applicant: STMicroelectronics S.r.l., 20041 Agrate Brianza MI (IT)
(72) Inventor: Rizzotto, Gianguido, 23862 Civate (IT); Amato, Paolo, 20051 Limbiate (IT); Porto, Domenico, 95123 Catania (IT)
(74) Representative: Pellegri, Alberto

(57) **Abstract**

A method of performing a Grover's or a Deutsch-Jozsa's quantum algorithm using a certain binary function defined on a space having a basis of vectors of n of qubits, comprises carrying out a superposition operation over input vectors for generating components of linear superposition vectors referred on a second basis of vectors of *n*+1 qubits, an entanglement operation over components of the linear superposition vectors for generating components of numeric entanglement vectors, and an interference operation over components of the numeric entanglement vectors for generating components of output vectors.

The method allows a non negligible time saving because the entanglement operation is carried out by generating, for components of each superposition vector, corresponding components of a numeric entanglement vector, each component referred to a respective vector of the second basis being
- equal to the corresponding component of the respective superposition vector, if the binary function is null in correspondence of the vector of the first basis constituted by the first *n* qubits of the respective vector of the second basis, or
- the opposite of the corresponding component of the respective superposition vector, if the binary function is non null in correspondence of the vector of the first basis constituted by the first *n* qubits of the respective vector of the second basis.
This method can be implemented in a relative quantum gate for running a Grover's or a Deutsch-Jozsa's quantum algorithm.

## Description

### FIELD OF THE INVENTION

The present invention relates to quantum algorithms and more precisely to a method and a relative hardware quantum gate for performing a Grover's or a Deutsch-Jozsa's quantum algorithm.

### BACKGROUND OF THE INVENTION

Quantum Search Algorithms are global random searching algorithms based on the quantum mechanics principles, laws, and quantum effects. They are used for controlling a process or for processing data in a database, and more specifically to control a process and/or including search-of-minima intelligent operations.

In the quantum search, each design variable is represented by a finite linear superposition of classical initial states, with a sequence of elementary unitary steps manipulating the initial quantum state |i〉 (for the input) such that a measurement of the final state of the system yields the correct output. Usually, three principle operators, i.e. *linear superposition (coherent states), entanglement,* and *interference,* are used in the quantum search algorithm.

For a better comprehension of the field of application of the invention, a brief description of quantum search algorithms is provided.

### OVERVIEW ON QUANTUM ALGORITHMS

The problems solved by the quantum algorithms may be stated as follows:

| | |
|---|---|
| **Input** | A function *f*:{0,1}^{*n*} →{0,1}^{*m*} |
| **Problem** | Find a certain property of *f* |

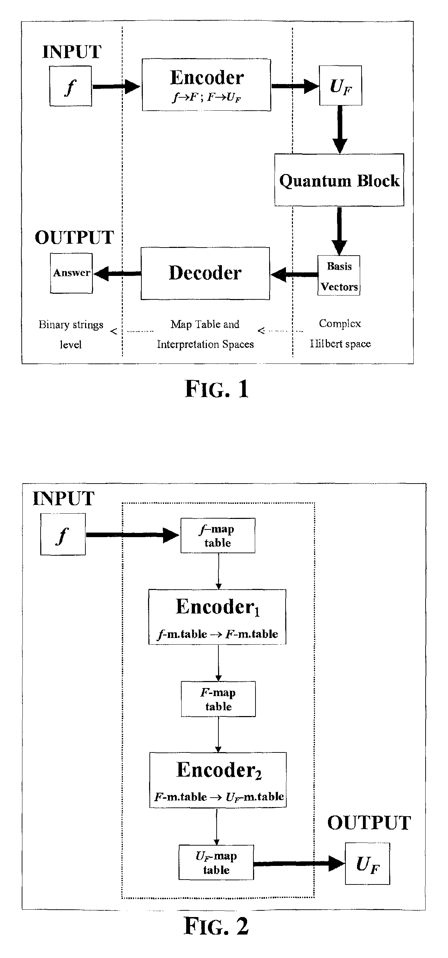

The structure of a quantum algorithm is outlined, by a high level representation, in the schematic diagram of Figure 1.

The input of a quantum algorithm is always a function *f* from binary strings into binary strings. This function is represented as a map table, defining for every string its image. Function *f* is firstly encoded into a unitary matrix operator *U*_{*F*} depending on *f* properties. In some sense, this operator calculates *f* when its input and output strings are encoded into canonical basis vectors of a Complex Hilbert Space: *U*_{*F*} maps the vector code of every string into the vector code of its image by *f*.

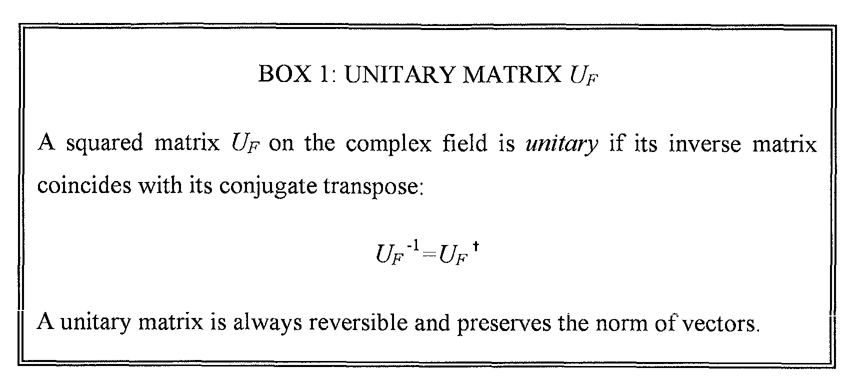

When the matrix operator *U*_{*F*} has been generated, it is embedded into a quantum gate *G*, a unitary matrix whose structure depends on the form of matrix *U*_{*F*} and on the problem we want to solve. The quantum gate is the core of a quantum algorithm. In every quantum algorithm, the quantum gate acts on an initial canonical basis vector (we can always choose the same vector) in order to generate a complex linear combination (let us call it superposition) of basis vectors as output. This superposition contains all the information to answer the initial problem.

After this superposition has been created, measurement takes place in order to extract this information. In quantum mechanics, measurement is a non-deterministic operation that produces as output only one of the basis vectors in the entering superposition. The probability of every basis vector of being the output of measurement depends on its complex coefficient (probability amplitude) in entering complex linear combination.

The segmental action of the quantum gate and of measurement constitutes the quantum block. The quantum block is repeated *k* times in order to produce a collection of *k* basis vectors. Being measurement a non-deterministic operation, these basic vectors won't be necessarily identical and each one of them will encode a piece of the information needed to solve the problem.

The last part of the algorithm consists into the interpretation of the collected basis vectors in order to get the right answer for the initial problem with a certain probability.

### Encoder

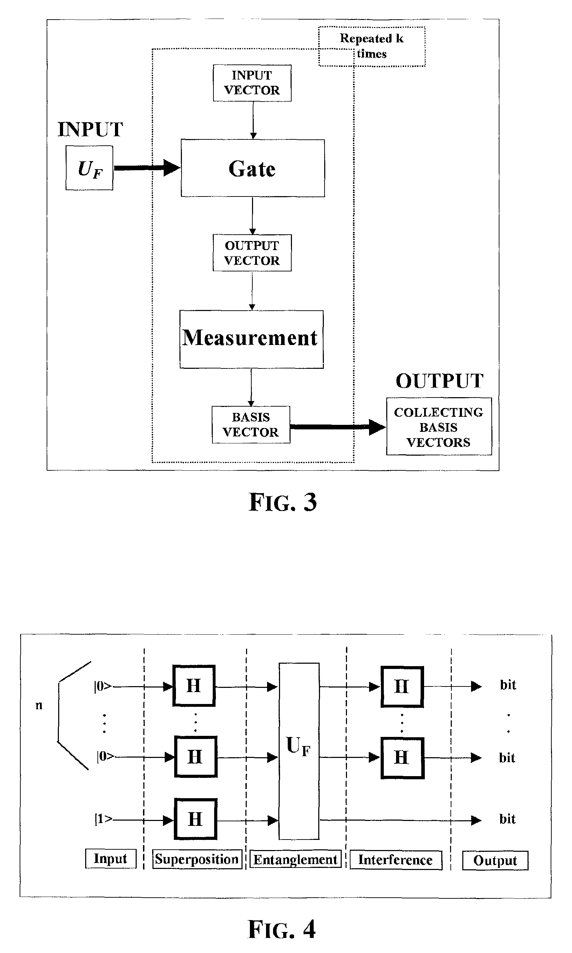

The behavior of the encoder block is described in the detailed schematic diagram of Figure 2.

Function *f* is encoded into matrix *U*_{*F*} in three steps.

### Step 1

The map table of function *f*:{0,1}^{*n*} →{0,1}^{*m*} is transformed into the map table of the injective function *F*: {0,1 }^{*n*+*m*} → {0,1}^{*n*+*m*} such that:$\text{F} \text{(} {\text{x}}_{\text{0}} \text{, ...,} {\text{x}}_{\text{n} \text{-1}} \text{,} {\text{y}}_{\text{0}} \text{, ...,} {\text{y}}_{\text{m} \text{-1}} \text{) = (} {\text{x}}_{\text{0}} \text{, ...,} {\text{x}}_{\text{n} \text{-1}} \text{,} \text{f} \text{(} {\text{x}}_{\text{0}} \text{, ...,} {\text{x}}_{\text{n} \text{-1}} \text{)⊕(} {\text{y}}_{\text{0}} \text{, .,} {\text{y}}_{\text{m} \text{-1}} \text{))}$

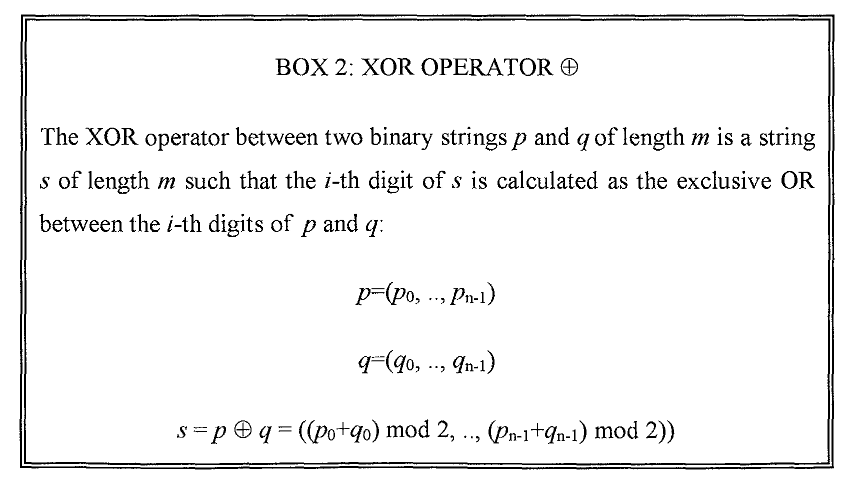

The need to deal with an injective function comes from the requirement that *U*_{*F*} is unitary. A unitary operator is reversible, so it cannot map two different inputs in the same output. Given that *U*_{*F*} is the matrix representation of *F*, *F* is supposed to be injective. If we directly employed the matrix representation of function *f*, we could obtain a non-unitary matrix, since *f* could be non-injective. So, injectivity is fulfilled by increasing the number of bits and considering function *F* instead of function *f*. Anyway, function *f* can always be calculated from *F* by putting (*y*₀, ..., *y*ₘ₋₁)=(0, ...,0) in the input string and reading the last *m* values of the output string.

### Step 2

Function *F* map table is transformed into *U*_{*F*} map table, following the following constraint:$\text{∀} \text{s} {\text{∈ {0,1}}}^{\text{n} \text{+} \text{m}} \text{:} {\text{U}}_{\text{F}} \text{[τ(} \text{s} \text{)] = τ[} \text{F} \text{(} \text{s} \text{)]}$

The code map τ :{0,1}^{*n*+*m*} → **C** ^{2^{*n*+*m*}} (**C** ^{2^{*n*+*m*}} is the target Complex Hilbert Space) is such that:

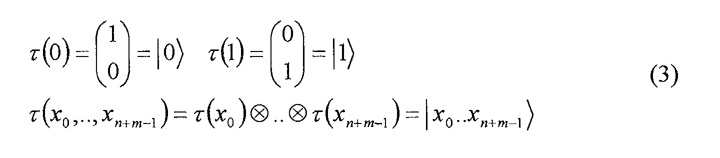

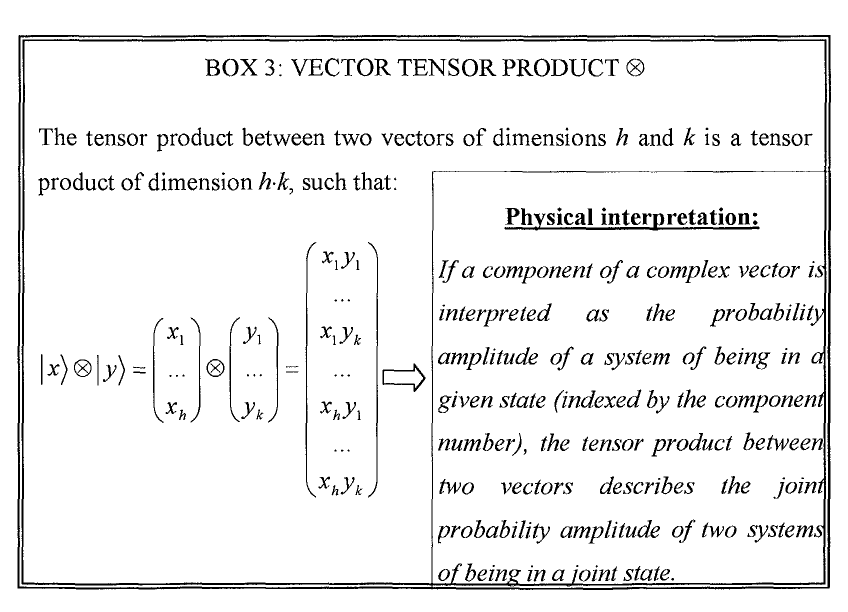

### Examples: Vector Tensor Products

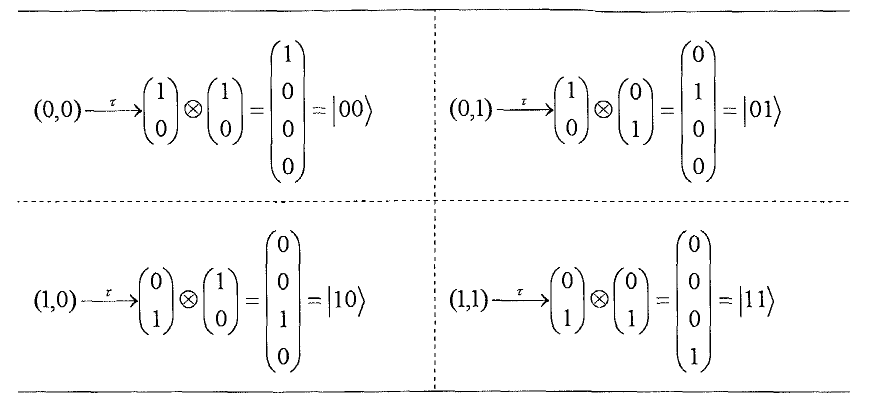

Code τ maps bit values into complex vectors of dimension 2 belonging to the canonical basis of **C**². Besides, using tensor product, τ maps the general state of a binary string of dimension *n* into a vector of dimension 2^{*n*}, reducing this state to the joint state of the *n* bits composing the register. Every bit state is transformed into the corresponding 2-dimensional basis vector and then the string state is mapped into the corresponding 2^{*n*}-dimensional basis vector by composing all bit-vectors through tensor product. In this sense tensor product is the vector counterpart of state conjunction.

Basis vectors are denoted using the *ket* notation |*i*>. This notation is taken from Dirac description of quantum mechanics.

### Step 3

*U*_{*F*} map table is transformed into *U*_{*F*} *using* the following transformation rule:$\text{[} {\text{U}}_{\text{F}} {\text{]}}_{\text{ij}} \text{= 1 ⇔} {\text{U}}_{\text{F}} \text{|} \text{j} \text{〉 = |} \text{i} \text{〉}$ which can be easily understood considering vectors |*i*> and |*j*> as column vectors. Belonging these vectors to the canonical basis, *U*_{*F*} defines a permutation map of the identity matrix rows. In general, row |*j*> is mapped into row |*i*>.

This rule will be illustrated in detail in an example of quantum algorithm: Grover's algorithm.

### Quantum block

The core of the quantum block is the quantum gate, which depends on the properties of matrix *U*_{*F*}*.* The scheme in Figure 3 gives a more detailed description of the quantum block.

The matrix operator *U*_{*F*} in Figure 3 is the output of the encoder block represented in Figure 2. Here, it becomes the input for the quantum block.

This matrix operator is firstly embedded into a more complex gate: the quantum gate *G*. Unitary matrix *G* is applied *k* times to an initial canonical basis vector |*i*> of dimension 2^{*n*+*m*}. Every time, the resulting complex superposition *G*|0..01..1> of basis vectors is measured, producing one basis vector |*x*_{*i*}> as result. All the measured basis vectors {|*x*_{*l*}>,..,|*x*_{*k*}>} are collected together. This collection is the output of the quantum block.

The "intelligence" of such algorithms is in the ability to build a quantum gate that is able to extract the information necessary to find the required property of *f* and to store it into the output vector collection.

The structure of the quantum gate for every quantum algorithm will be discussed in detail, observing that a general description is possible.

In order to represent quantum gates we are going to employ some special diagrams called quantum circuits.

An example of quantum circuit, relative to the so called Deutsch-Jozsa's quantum algorithm, is reported in Figure 4. Every rectangle is associated to a matrix 2^{*n*}×2^{*n*}, where *n* is the number of lines entering and leaving the rectangle. For example, the rectangle marked *U*_{*F*} is associated to matrix *U*_{*F*}*.* Typically, matrix H represents a Hadamard rotation

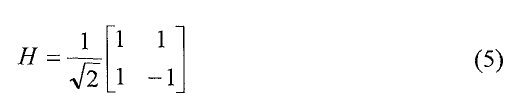

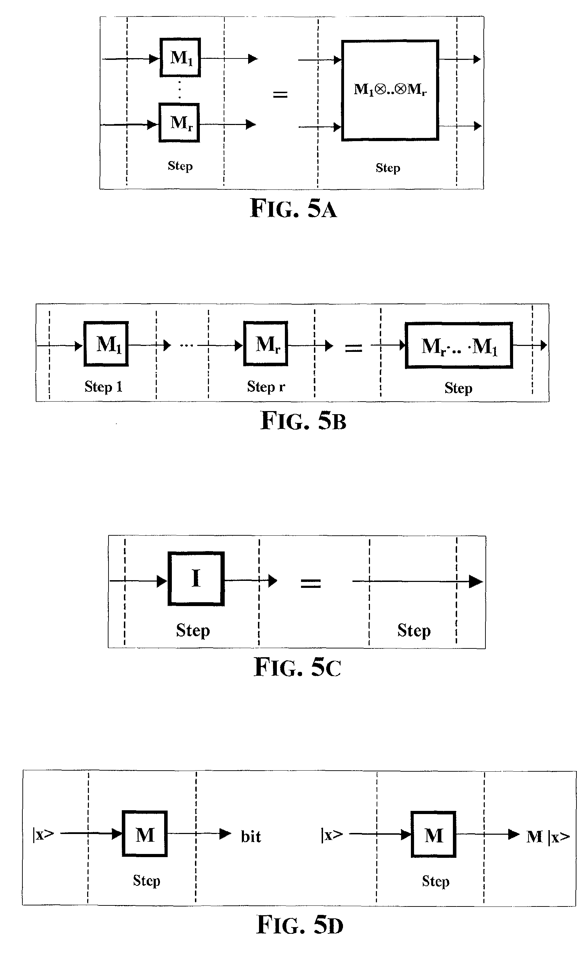

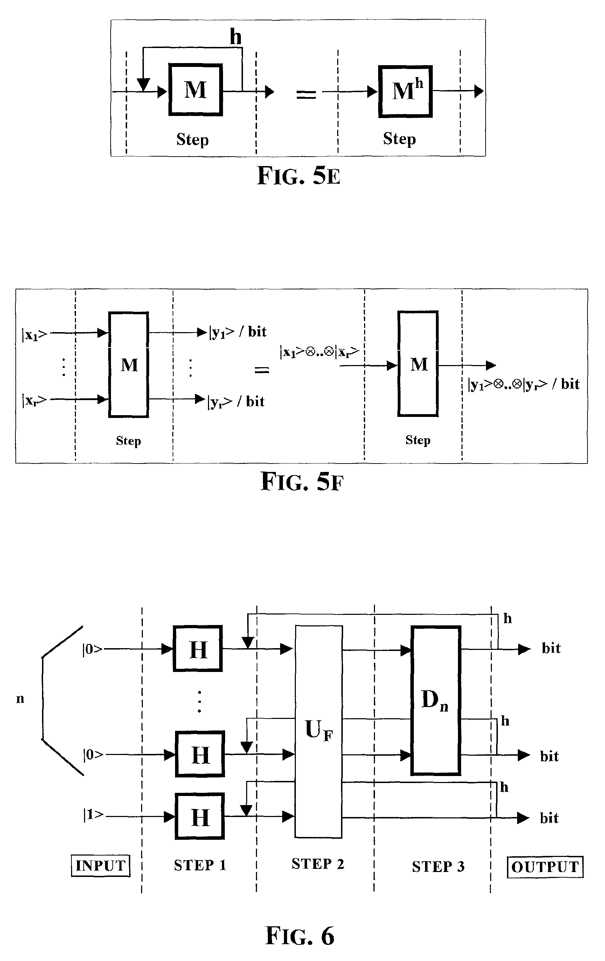

Quantum circuits let us give a high-level description of the gate and, using some transformation rules, which are listed in Figure 5, it is possible to compile them into the corresponding gate-matrix.

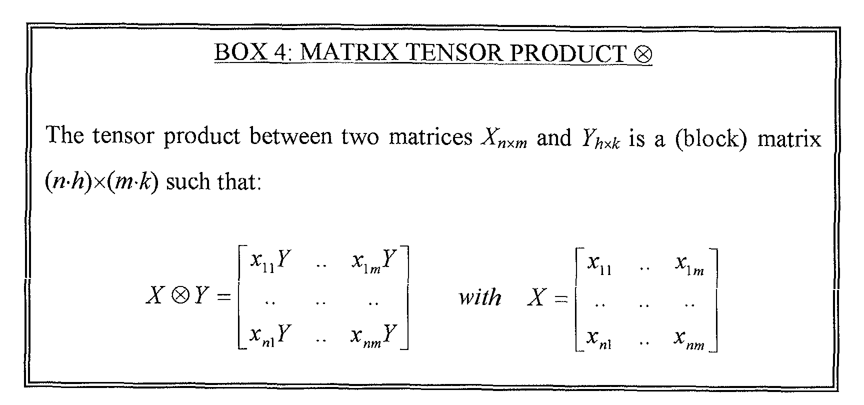

### Example: Matrix Tensor Product

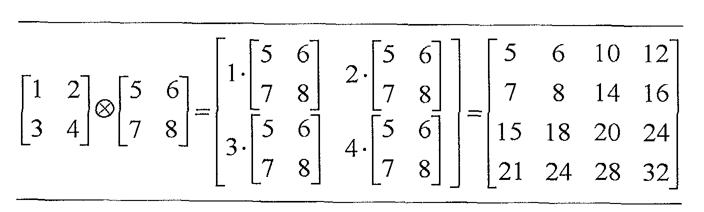

It will be clearer how to use these rules when we afford the first example of quantum algorithm.

### Decoder

The decoder block has the function to interpret the basis vectors collected after the iterated execution of the quantum block. Decoding these vectors means to retranslate them into binary strings and interpreting them directly if they already contain the answer to the starting problem or use them, for instance as coefficients vectors for some equation system, in order to get the searched solution. This part will not being investigated in detail because it is a non-interesting easy classical part.

Because of the particular importance of the Grover's quantum algorithm in the realization of controllers and of data search algorithms in databases, a brief description of the Grover's algorithm is given.

### GROVER'S PROBLEM

Grover's problem is so stated:

| | |
|---|---|
| **Input** | A function *f*:{0,1}^{*n*} → {0,1} such that ∃*x*∈{0,1}^{*n*}:(*f*(*x*)-1∧∀*y*∈{0,1}^{*n*}:*x*≠*y*⇒*f*(*y*)=0) |
| **Problem** | Find *x* |

In Deutsch-Jozsa's algorithm there are two classes of input functions and it must be determined what class the input function belonged to. In this case the problem is in some sense identical in its form, even if it is harder because now we are dealing with 2^{*n*} classes of input functions (each function of the kind described constitutes a class).

The diagram of the Grover's algorithm is depicted in Figure 6, and the gate equation is

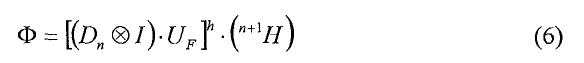

Operator *D*_{*n*} is called diffusion matrix of order *n* and it is responsible of interference in this algorithm. This matrix is defined in this way:

| | | | | | | | |
|---|---|---|---|---|---|---|---|
| ***D***_{***n***} | \|0..0> | \|0..1> | ... | \|*i*> | ... | \|1..0> | \|1..1> |
| \|0..0> | **-1+1/2**^{***n*-1**} | 1/2^{*n*-1} | ... | 1/2^{*n*-1} | ... | 1/2^{*n*-1} | 1/2^{*n*-1} |
| \|0..1> | 1/2^{*n*-1} | **-1+1/2**^{***n*-1**} | ... | 1/2^{*n*-1} | ... | 1/2^{*n*-1} | 1/2^{*n*-1} |
| ... | ... | ... | **...** | ... | ... | ... | ... |
| \|*i*> | 1/2^{*n*-1} | 1/2^{*n*-1} | ... | **-1+1/2**^{***n*-1**} | ... | 1/2^{*n*-1} | 1/2^{*n*-1} |
| ... | ... | ... | ... | ... | **...** | ... | ... |
| \|1..0> | 1/2^{*n*-1} | 1/2^{*n*-1} | ... | 1/2^{*n*-1} | ... | **-1+1/2**^{***n*-1**} | 1/2^{*n*-1} |
| \|1.. 1> | 1/2^{*n*-1} | 1/2^{*n*-1} | ... | 1/2^{*n*-1} | ... | 1/2^{*n*-1} | **-1+1/2**^{***n*-1**} |

Grover's algorithm may be implemented in routines for searching a desired item in a set, by representing in vector form each item of the set constituting an input set of vectors, and applying a Grover's algorithm to this set of vectors: the output vector represents the desired item.

The implementation of a Grover's algorithm clearly implies the calculation of several vector products. In fact all qubits must be multiplied by matrix *H*, then by the entanglement matrix *U*_{*F*} and all qubits but the latter must be multiplied by matrix *D*_{*n*}*.*

These multiplications could be carried out via software, but it is quite evident that the number of qubits of a quantum algorithm could be very critical in terms of computational speed. In fact, referring to the scheme in Figure 6, it must be noted that the addition of only one qubit doubles the dimensions of matrices, thus the number of elements (and of products) increases exponentially.

A method of performing the superposition operation of a Grover's or of a Deutsch-Jozsa's quantum algorithm over an input set of vectors is disclosed in EP01830383.4, in the name of the same applicant. This method exploits the fact that any rotated vector, obtained performing the Hadamard rotation (on an input vector) contemplated by the superposition operation of these quantum algorithms, can be easily encoded in a binary vector. Therefore, the successive tensor product of the rotated vectors, for generating linear superposition vectors, can be carried out by means of logic gates. This fact allows a noticeable time saving because logic gates are very fast.

However, this is not sufficient to speed up remarkably the running of these quantum algorithms because the entanglement matrix *U*_{*F*} is a 2^{*n*+1} × 2^{*n*+1} square matrix, which implies a considerable computational weight both in Grover's algorithm as well as in Deutsch-Jozsa's algorithm.

### OBJECT AND SUMMARY OF THE INVENTION

It has been found and is the object of the present invention a method and a relative quantum gate for performing entanglement operations in Deutsch-Jozsa's or Grover's quantum algorithms in a very fast manner.

It has been noticed that a large number of multiplications required by the entanglement operation gives a null result, because only one component per row of the entanglement matrix *U*_{*F*} is non null. The entanglement operation generates an entanglement vector by permuting or not the places of couples of opposite components of a linear superposition vector, depending on the value assumed by the function *f(.)*. More specifically, if function *f(.)* is null in correspondence of the vector identified by the first (leftmost) *n* qubits in common of the two *n*+1 qubit vectors to which a couple of opposite components that of the superposition vector is referred to, then the corresponding couple of components of the entanglement vector is equal to that of the superposition vector, otherwise is the opposite.

Therefore, it is not necessary to calculate the entanglement matrix *U*_{*F*} to generate an entanglement vector from a superposition vector, but it is sufficient to copy or invert components of a superposition vector to generate corresponding components of an entanglement vector, depending on the values of the function *f(.)* processed by the quantum algorithm.

More precisely, object of the present invention is a method of performing a Grover's or a Deutsch-Jozsa's quantum algorithm using a certain binary function defined on a space having a basis of vectors of *n* of qubits, comprising carrying out a superposition operation over input vectors for generating components of linear superposition vectors referred on a second basis of vectors of *n*+1 qubits, an entanglement operation over components of the linear superposition vectors for generating components of numeric entanglement vectors, and an interference operation over components of the numeric entanglement vectors for generating components of output vectors.

The method of the invention allows a non negligible time saving because the entanglement operation is carried out by generating, for components of each superposition vector, corresponding components of a numeric entanglement vector, each component referred to a respective vector of the second basis being
- equal to the corresponding component of the respective superposition vector, if the binary function is null in correspondence of the vector of the first basis constituted by the first *n* qubits of the respective vector of the second basis, or
- the opposite of the corresponding component of the respective superposition vector, if the binary function is non null in correspondence of the vector of the first basis constituted by the first *n* qubits of the respective vector of the second basis.

This method can be implemented in a quantum gate for running a Grover's or a Deutsch-Jozsa's quantum algorithm using a certain binary function defined on a space having a basis of vectors of *n* of qubits, composed of a superposition subsystem carrying out a superposition operation over components of input vectors for generating components of linear superposition vectors referred on a second basis of vectors of *n*+1 qubits, an entanglement subsystem carrying out an entanglement operation over components of the linear superposition vectors for generating components of numeric entanglement vectors, and an interference subsystem carrying out an interference operation over components of the numeric entanglement vectors for generating components of output vectors.

The entanglement subsystem comprises a command circuit generating a number (2^{*n*}) of logic command signals encoding the values of the binary function in correspondence of the vectors of the first basis, circuit means input with the logic command signals that generate, for components of each superposition vector, corresponding signals representing components of a numeric entanglement vector.

Each component referred to a respective vector of the second basis is equal to the corresponding component of the respective superposition vector, if the binary function is null in correspondence of the vector of the first basis constituted by the first *n* qubits of the respective vector of the second basis, or the opposite of the corresponding component of the respective superposition vector, if the binary function is non null in correspondence of the vector of the first basis constituted by the first *n* qubits of the respective vector of the second basis.

The invention is more precisely defined in the annexed claims.

### BRIEF DESCRIPTION OF THE DRAWINGS

The particular aspects and advantages of the invention will become more evident through the following description of several important embodiments and by referring to the attached drawings, wherein:
- **Figure 1**: is a block diagram of Quantum Algorithms;
- **Figure 2**: is a block diagram of an Encoder;
- **Figure 3**: is a general structure of the Quantum Block in Figure 1;
- **Figure 4**: is a circuit for a Deutsch-Jozsa's quantum gate;
- **Figure 5a**: shows an example of tensor product transformation;
- **Figure 5b**: shows an example of dot product transformation;
- **Figure 5c**: shows the identity transformation;
- **Figure 5d**: shows an example of propagation rule;
- **Figure 5e**: shows an example of iteration rule;
- **Figure 5f**: explains the input/output tensor rule;
- **Figure 6**: is an example of a circuit realizing Grover's quantum gate;
- **Figure 7**: is the graphic of a function to be processed by a Grover's quantum algorithm;
- **Figure 8**: is a two-qubits quantum gate of the invention for Grover's algorithm with one iteration;
- **Figure 9**: is a detailed view of the superposition subsystem of the quantum gate of Figure 8;
- **Figure 10**: depicts the logic part of the entanglement subsystem of a quantum gate of the invention for the function of Figure 7;
- **Figure 11**: is a detailed view of the entanglement subsystem of the quantum gate of Figure 8;
- **Figure 12**: is a detailed view of the interference subsystem of the quantum gate of Figure 8.

### DESCRIPTION OF SEVERAL EMBODIMENTS OF THE INVENTION

The quantum gate of the invention is suitable for fast running decision making or data search routines, based on a Deutsch-Jozsa's or a Grover's quantum algorithm applied over a set of input vectors. It is composed of a superposition subsystem carrying out a linear superposition, an entanglement subsystem carrying out an entanglement operation and an interference subsystem carrying out an interference operation according to a Grover's or a Deutsch-Jozsa's quantum algorithm.

An essential characteristic of the quantum gate of the invention consists in the fact that the entanglement subsystem does not multiply a superposition vector for the entanglement matrix *U*_{*F*}*,* but generates components of an entanglement vector simply by copying or inverting respective components of the superposition vector depending on values of the function *f(.)*.

This expedient allows a relevant reduction of the number of multiplications in respect to known methods, and can be carried out very simply with logic gates or multiplexers. For this reason, the quantum gate of the invention may be conveniently used for running decision making algorithms or data search routines in large databases in a very fast manner.

In order to show how the calculation of an entanglement vector can be speeded up by the method of the invention, an example of quantum search algorithm in which each vector is composed of two qubits is given. The extension to vectors of more than two qubits is immediate.

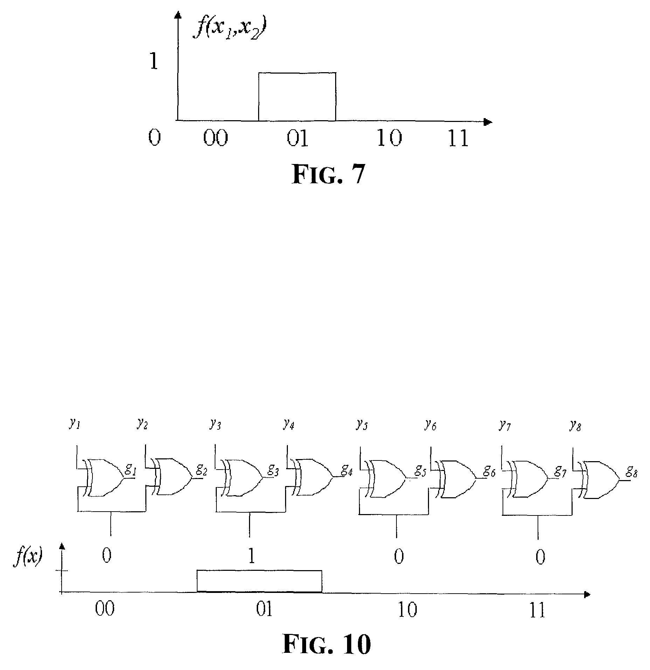

Let us consider a function *f*: {0,1}^{*2*}→{0,1} having the following definition law: 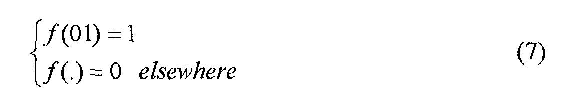 whose diagram is depicted in Figure 7.

According to known methods, this function should be translated into a function *F*: {0,1}^{*3*}→{0,1}^{*3*} and therefore into the matrix *U*_{*F*} 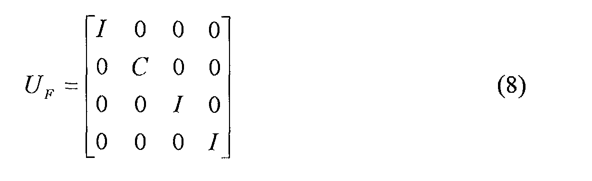 where

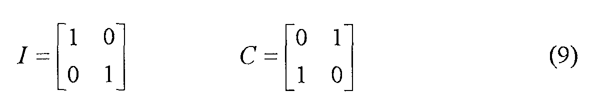

Let us consider the following linear superposition vector *Y**:

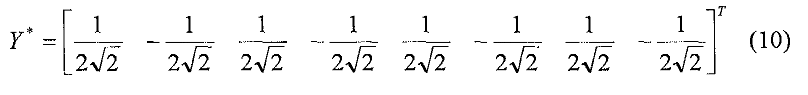

Known methods contemplate generating components of the corresponding entanglement vector *G** 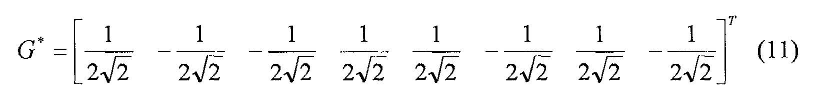 by calculating the product *G** *= U*_{*F*} · *Y**, which implies many (64) multiplications.

According to the method of the invention, the components of the vector *G** are more simply obtained by copying or inverting the corresponding components of *Y**, depending on the values assumed by the function *f(.)*. More precisely, all components of vector *G** but the third and the fourth are equal to the corresponding components of *Y** because the function *f(.)* is 0 for vectors |00〉, |10〉 and |11〉, while the third and the fourth components of *G** are obtained by inverting the corresponding components of *Y** because *f(.)* is 1 for vector |01〉.

As a consequence, the entanglement operation of Deutsch-Jozsa's or Grover's quantum algorithms can be implemented in very simple and fast quantum gates.

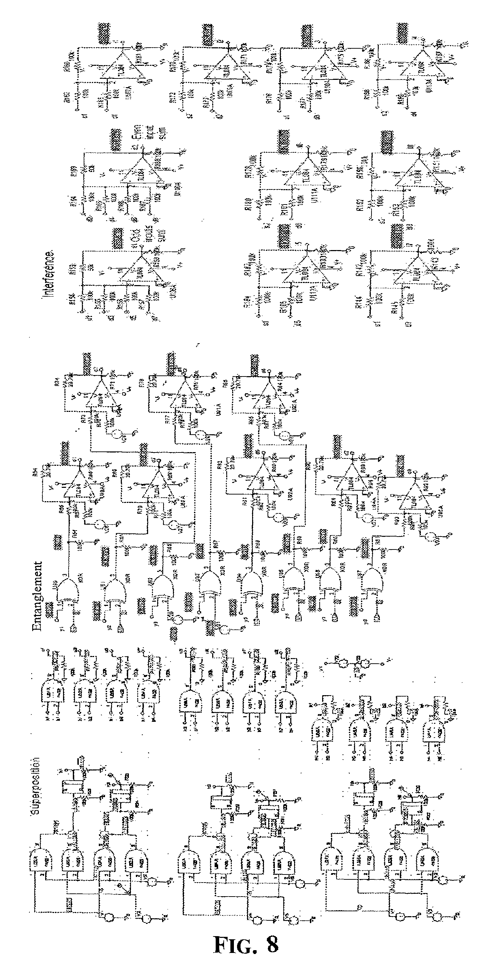

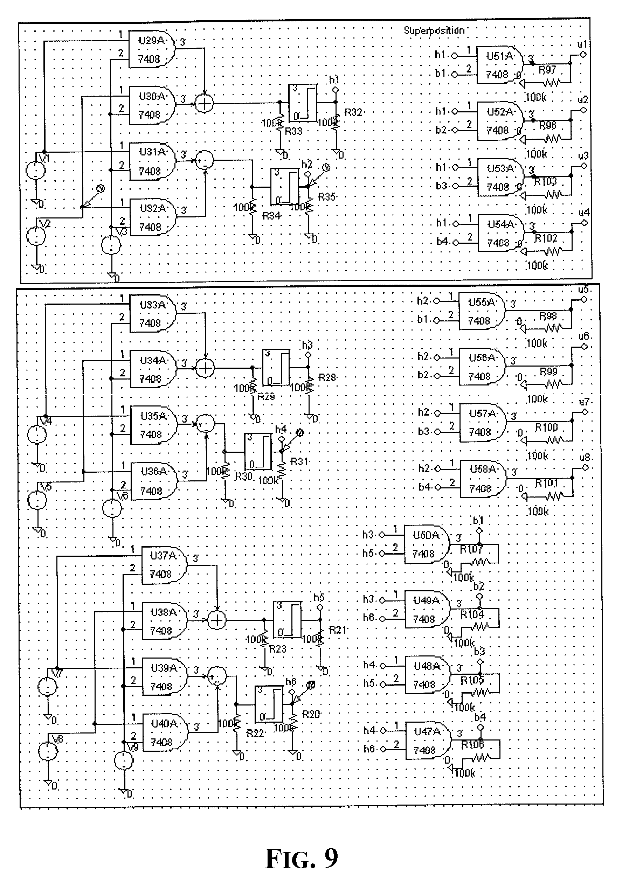

A particular quantum gate of the invention, especially designed for carrying out the Deutsch-Jozsa's quantum algorithm or the Grover's algorithm with only one iteration (*h*=1), can be the one depicted in Figure 8. This quantum gate has a superposition subsystem, which can be that depicted in Figure 9 and disclosed in the European patent application EP01830383.4 in the name of the same applicant, an entanglement subsystem made of logic gates and operational amplifiers and an interference subsystem.

This particular embodiment of a quantum gate of the invention exploits the fact that the vector *Y** can be encoded, by using the transformation 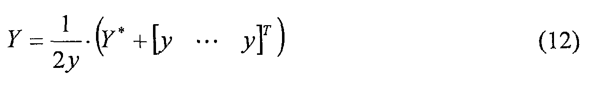 where$\text{y} \text{=} \frac{\text{1}}{\text{2} \sqrt{\text{2}}}$ in the considered case, in the following encoded superposition vector:$\text{Y} {\text{= [1 0 1 0 1 0 1 0]}}^{\text{T}}$

It is easy to demonstrate that the vector *G* that encodes the entanglement vector *G** = *U*_{*F*} · *Y** according to the cited transformation (eq. 12) 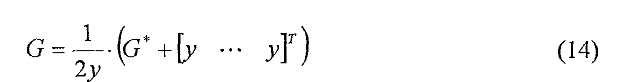 is *G* = *U*_{*F*} · *Y*. Therefore, components *g*_{*i*} of the encoded entanglement vector *G* can be obtained, according to the method of the invention, by copying or inverting the corresponding components *y*_{*i*} of the encoded superposition vector *Y*, depending on the values of function *f(.)*.

For the considered example, the encoded entanglement vector *G* is$\text{G} {\text{= [1 0 0 1 1 0 1 0]}}^{\text{T}}$ which corresponds to the numeric entanglement vector given by eq. 11.

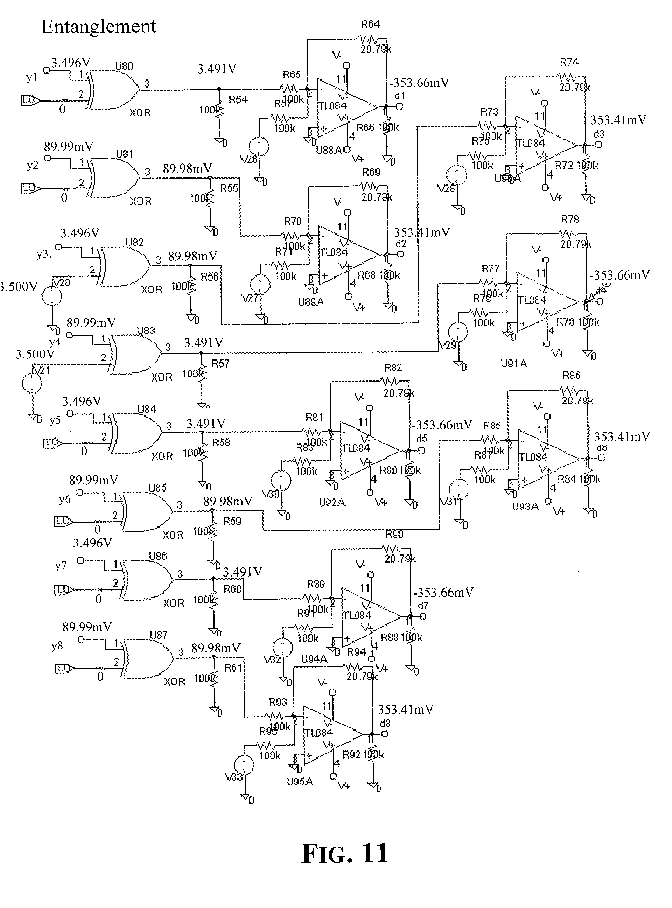

An example of a logic circuit for carrying out the entanglement operation of a Grover's or Deutsch-Jozsa's algorithm is depicted in Figures 10. Each logic gate XORs a component of the encoded superposition vector *y*_{*i*} with a corresponding value of the function *f(.)*, generating a corresponding component *g*_{*i*} of encoded entanglement vector. Each non null component *y*_{*i*} is represented by a voltage of 3.5V, while each null component is represented by a null voltage.

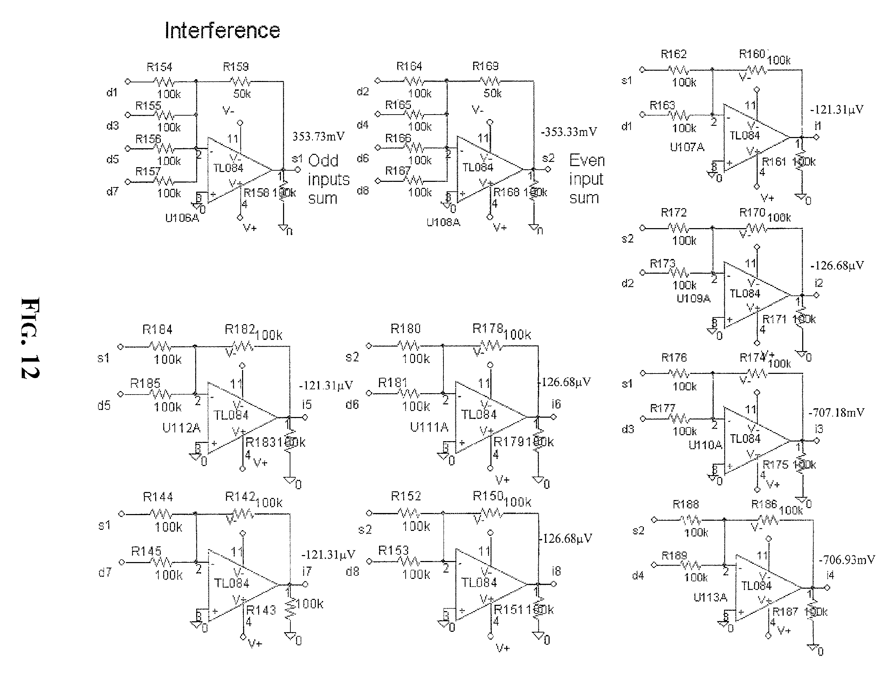

The components of the encoded entanglement vector are then converted in corresponding components d1, ..., d8 of a numeric entanglement vector by means of an array of digital/analog converters, depicted in Figure 11, each composed of an adder that inverts the transformation given by eq. 14. The output voltages d1, ..., d8 of the operational amplifiers are about ±0.3535 Volts, which corresponds to a numeric value of$\text{±} \frac{\text{1}}{\text{2} \sqrt{\text{2}}} \text{.}$

A more difficult task is to deal with the interference operation of Grover's algorithm. In fact, differently from the entanglement operation, vectors generated by the interference operation are not composed by elements having only two possible values. Moreover, the presence of tensor products, whose number increases dramatically with the dimensions, constitutes a critical point at this step.

It is possible to carry out quickly the interference operation of Grover's quantum algorithm. It has been noticed that the matrix *D*ₙ⊗*I* has the following properties:
- odd columns (or rows, because *D*ₙ⊗*I* is symmetric) have nonzero odd components and even columns have nonzero even components;
- the value of all nonzero components, but the i^{th} component of i^{th} column (diagonal elements), is 1/2ⁿ⁻¹. The components on the up-left down-right diagonal of the matrix differ from the other nonzero components because they are decreased by 1;
- being *G** the numeric entanglement vector, the output vector of the quantum algorithm *V*=(*D*ₙ⊗*I*)*G** involves only a suitable weighted sum of components of *G**, the value 1/2ⁿ⁻¹ depending only from the number *n* of qubits.

From the above analysis, the generic element ν_{*i*} of *V* can be written as follows in function of *g*$\frac{\text{*}}{\text{i}}$:

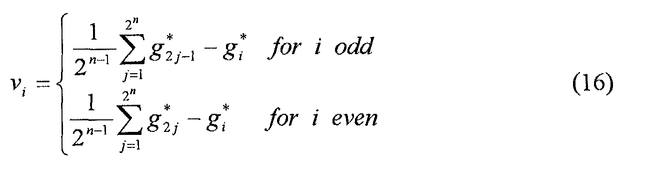

Therefore, in order to calculate a component ν_{*i*} of the output vector it is sufficient to calculate a weighted sum of even 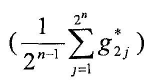 or odd 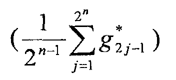 components of the numeric entanglement vector and to subtract from it the corresponding component *g*$\frac{\text{*}}{\text{i}}$ of the numeric entanglement vector.

According to the above formulas, the pre-interference sum block of the interference subsystem depicted in Figure 12, has adders generating voltage signals representing scaled sums of odd (s1) and even (s2) components with a scale factor of 1/2ⁿ⁻¹ (0.5 in this case). The interference subsystem comprises furthermore an array of adders input with a voltage representing a component of the numeric entanglement vector (d1, ..., d8) and with a respective scaled sum (s1 or s2), generating voltages representing components (i1 ..., i8) of the output vector.

When the Grover's algorithm terminates, only two of them (i3, i4) may assume values close to$\text{±} \frac{\text{1}}{\sqrt{\text{2}}} \text{= ±0.7071067,}$ denoting the position of the searched element.

With the same entanglement as in the previous section, third and fourth OPAMPs (i3 and i4) must have nonzero values. This fact is confirmed by the PSPICE simulation depicted in Figure 12 (707 mV against 0.1 mV of other outputs).

As it appears evident to a skilled person, the computational speed is remarkably reduced because of a smaller number of products (only one for each element of the output vector) and more precisely 2ⁿ⁺¹ against 4ⁿ⁺¹ of classical approach. Even the number of additions has been reduced (2ⁿ(2ⁿ+1) instead of 4ⁿ⁺¹). But the most important fact is that all these operations can be easily carried out via hardware with few operational amplifiers (2ⁿ+2). Moreover, if *n* is the number of qubits (in the considered example *n*=2), this embodiment of a quantum gate of the invention calculates only 2ⁿ⁺¹ products (8) instead of 2²ⁿ⁺² (64) required in prior art methods, thus reducing noticeably the time required for carrying out the entanglement operation.

It is worth noticing that it is not necessary to calculate all the components of the entanglement or output vectors, because the odd components of any vector are always opposite to the even components, as it is possible to infer looking at signals d1, d3, d5, d7 and i1, i3, i5, i7. Therefore, it is clear that the number of logic gates or adders of Figures 11 and 12 could have been halved simply by carrying out the entanglement and interference operations only on the odd or even components, calculating the other components by inverting the first ones.

## Claims

1. A method of performing a Grover's or a Deutsch-Jozsa's quantum algorithm using a certain binary function (*f*) defined on a space having a basis of vectors of *n* qubits, comprising carrying out a superposition operation over input vectors for generating components of linear superposition vectors referred on a second basis of vectors of *n*+1 qubits, an entanglement operation over components of said linear superposition vectors for generating components of numeric entanglement vectors, and an interference operation over components of said numeric entanglement vectors for generating components of output vectors, **characterized in that** said entanglement operation is carried out by:
generating, for components of each superposition vector, corresponding components off a numeric entanglement vector (d1, ..., d8), each component referred to a respective vector of the second basis being
equal to the corresponding component of the respective superposition vector, if said binary function (*f*) is null in correspondence of the vector of the first basis constituted by the first *n* qubits of said respective vector of the second basis, or
the opposite of the corresponding component of the respective superposition vector, if said binary function (*f*) is non null in correspondence of the vector of the first basis constituted by the first *n* qubits of said respective vector of the second basis.

2. The method of claim 1, wherein said components are the even components of vectors, and the odd components of each output vectors are obtained inverting its even components.

3. The method of claim 1, wherein said components are the odd components of vectors, and the even components of each output vectors are obtained inverting its odd components.

4. The method of claim 1, wherein said even or odd components of a numeric entanglement vector (d1, ..., d8) are obtained carrying out the following operations:
encoding components of each linear superposition vector (*y*$\frac{\text{*}}{\text{i}}$) with a low logic value if negative and with a high logic value if positive, generating components of encoded superposition vectors (*y*_{*i*});
generating, for components of each encoded superposition vector (*y*_{*i*}), corresponding components of an encoded entanglement vector (*g*_{*i*}), each component referred to a respective vector of the second basis being obtained by
copying the corresponding component of the respective encoded superposition vector (*y*_{*i*}), if said binary function (*f*) is null in correspondence of the vector of the first basis constituted by the first *n* qubits of said respective vector of the second basis, or
logically inverting the corresponding component of the respective encoded superposition vector (*y*_{*i*}), if said binary function (*f*) is non null in correspondence of the vector of the first basis constituted by the first *n* qubits of said respective vector of the second basis;
decoding the components of encoded entanglement vectors (*g*_{*i*}) generating said components of numeric entanglement vectors (d1, ..., d8).

5. The method of claim 4, wherein each of said components of encoded entanglement vector (*g*_{*i*}) is obtained by XORing the corresponding component of the encoded superposition vector (*y*_{*i*}) with the value of said function in correspondence of said vector of the first basis constituted by said first *n* qubits.

6. The method of claim 1 of performing a Grover's quantum algorithm, wherein said interference operation comprises the following operations:
calculating a weighed sum with a scale factor (1/2^{*n*-1}) of the even or the odd components of a numeric entanglement vector (d1, ..., d8);
generating, respectively, each even or odd component of an output vector (i1, ..., i8) subtracting a corresponding even or odd component of a numeric entanglement vector (d1, ..., d8) from said weighed sum (s1, s2).

7. A quantum gate for running a Grover's or a Deutsch-Jozsa's quantum algorithm using a certain binary function (*f*) defined on a space having a basis of vectors of *n* qubits, composed of a superposition subsystem carrying out a superposition operation over components of input vectors for generating components of linear superposition vectors referred on a second basis of vectors of *n*+1 qubits, an entanglement subsystem carrying out an entanglement operation over components of said linear superposition vectors for generating components of numeric entanglement vectors, and an interference subsystem carrying out an interference operation over components of said numeric entanglement vectors for generating components of output vectors, said entanglement subsystem comprising
a command circuit generating a number (2ⁿ) of logic command signals encoding the values of said binary function (*f*) in correspondence of the vectors of the first basis;
circuit means, input with said logic command signals, generating, for components of each superposition vector, corresponding signals representing components of a numeric entanglement vector (d1, ..., d8), each component referred to a respective vector of the second basis being
equal to the corresponding component of the respective superposition vector, if said binary function (*f*) is null in correspondence of the vector of the first basis constituted by the first *n* qubits of said respective vector of the second basis, or
the opposite of the corresponding component of the respective superposition vector, if said binary function (*f*) is non null in correspondence of the vector of the first basis constituted by the first *n* qubits of said respective vector of the second basis.

8. The quantum gate of claim 7, wherein said circuit means encode components of each linear superposition vector (*y*$\frac{\text{*}}{\text{i}}$) with a low logic value if negative and with a high logic value if positive, generating signals representing components of an encoded superposition vector (*y*_{*i*}), and comprise
an array of XOR logic gates each input with a signal representing a component of an encoded superposition vector (*y*_{*i*}) and with a relative logic command signal, generating voltage signals representing components of encoded entanglement vectors (*g*_{*i*});
an array of the same number of digital/analog converters that decodes components of the encoded entanglement vectors, generating signals representing corresponding components of numeric entanglement vectors (d1, ..., d8).

9. The quantum gate of claim 8, wherein each digital/analog converter is an adder that outputs a signal representing the weighed difference with a second scale factor between said component of encoded entanglement vectors (*g*_{*i*}) and a reference value (V26, ..., V33).

10. The quantum gate of claim 7 for running a Grover's quantum algorithm, wherein said interference subsystem comprises
an adder input with voltage signals representing even or odd components of a numeric entanglement vector (d1, ..., d8) and generating a sum signal (s1, s2) representing a weighed sum with a scale factor (1/2^{*n*-1}) of said even or odd components;
an array of adders each being input with a respective signal representing an even or odd component, respectively, of a numeric entanglement vector (d1, ..., d8) and with said sum signal (s1, s2), generating a signal representing an even or odd component, respectively, of output vector (i1 ..., i8) as the difference between said sum signal (s1, s2) and said signal representing an even or odd component of a numeric entanglement vector (d1, ..., d8).
